# EUROPEAN PATENT APPLICATION

(11) **EP 2 988 260 A1**
(43) Date of publication of application: **24.02.2016**
(21) Application number: 14181575.3
(22) Date of filing: 20.08.2014
(51) Int. Cl.: G06Q 30/02

(54) **Method of registering interactive terminals to locations**

(71) Applicant: Posterfy Oy, 02600 Espoo (FI)
(72) Inventor: Paloheimo, Olli-Heikki, 02130 Espoo (FI); Heikel, Jussi Oskari, 00730 Helsinki (FI); Hjelt, Kari Tapani, 02710 Espoo (FI); Kannas, Tuomas Ilmari, 00330 Helsinki (FI); Mattila, Tomi Juha Petteri, 02140 Espoo (FI)
(74) Representative: Becker Kurig Straus

(57) **Abstract**

A method of registering an interactive terminal to a location is provided. The interactive terminal detects its coupling to the location, and detects an identification code associated with the location. Subsequently, the interactive terminal communicates the identification code to a server arrangement, which then selects a content item based on the identification code associated with the location. Thereafter, the server arrangement sends the selected content item to the interactive terminal, which then presents the content item on its display.

## Description

### TECHNICAL FIELD

The present disclosure relates generally to content delivery; and more specifically, to systems for registering interactive terminals to corresponding locations. Moreover, the present disclosure relates to methods of registering interactive terminals to corresponding locations. Furthermore, the present disclosure relates to interactive terminals suitable for use with the aforementioned systems and methods.

### BACKGROUND

Today, interactive terminals are being used increasingly in public places for various purposes, for example, such as for displaying advertisements. A server delivering information to such terminals needs to know a location of each terminal, so as to be able to deliver correct information to the terminals, and to collect usage data related to specific locations of the terminals. Moreover, in a case of a group of terminals, the server needs to know a mutual order of the terminals, so as to be able to show advertisement sequences and the like,

Configuring a terminal to a location is typically a manual process, and therefore, is prone to human errors.

Moreover, when a terminal at a given location is broken, for example, due to malfunction or vandalism, the terminal is typically replaced with a new terminal, rather than being serviced on the spot. As a result, the new terminal also needs to be configured to the given location. Thus, configuring terminals to locations is a recurrent problem.

Conventionally, terminals are installed by technically-trained staff. Therefore, it is desirable that such terminals could be installed by non-technical people in masses. Thus, it is also desirable that an installation and configuration procedure is as easy and fail-proof as possible.

US 8,433,535 discloses a device, namely a sanitary towel dispenser, with a microprocessor, sensors and display for provisioning of advertisements and information. However, this document does not disclose means for configuring the device to a location,

US 8,315,913 discloses a system and method for determining a location of a physically-installed terminal. The method requires an installer to input location data to the system manually. During an installation procedure, certain content is sent to be displayed on the terminal. Once displayed, the display of the content is verified visually.

### SUMMARY

The present disclosure seeks to provide an improved method of registering an interactive terminal to a location.

Moreover, the present disclosure seeks to provide an improved system for registering interactive terminals to corresponding locations,

Moreover, the present disclosure seeks to provide an improved interactive terminal.

In one aspect, embodiments of the present disclosure provide a method of registering an interactive terminal to a location. The interactive terminal detects its coupling to the location, and detects an identification code associated with the location. Optionally, the coupling and the identification code are detected using a Radio-Frequency IDentification (RFID) reader of the interactive terminal that is arranged for reading an RFID tag attached to the location.

Subsequently, the interactive terminal communicates the identification code to a server arrangement, which then selects a content item based on the location to which the interactive terminal is attached, namely based on the identification code associated with the location.

Thereafter, the server arrangement sends the selected content item to the interactive terminal, which then presents the content item on its display.

Moreover, optionally, the server arrangement verifies a response related to the content item presented on the display of the interactive terminal. Optionally, the response is verified by at least one of:
(i) one or more gestures detected by a user interface of the interactive terminal;
(ii) an image of the content item presented on the display of the interactive terminal; and/or
(iii) a communication from a verification device.

Upon successful verification, the server arrangement generates registration information from the identification code associated with the location and a terminal identifier of the interactive terminal to register the interactive terminal to the location.

In another aspect, embodiments of the present disclosure provide a system for registering an interactive terminal to a location.

In yet another aspect, embodiments of the present disclosure provide an interactive terminal. The interactive terminal includes means for attaching the interactive terminal to a location, a processor, a memory coupled to the processor, a reader coupled to the processor, a communication interface coupled to the processor, and a display coupled to the processor. The memory stores computer-readable program code that, when executed on the processor, is configured to:
(i) employ the reader to detect an identification code associated with the location,
(ii) communicate the identification code to a server arrangement, via the communication interface,
(iii) receive a content item from the server arrangement, via the communication interface, wherein the content item is indicative of the location, and
(iv) present the content item on the display.

Optionally, the identification code is stored in an RFID tag attached to the location, and the reader is an RFID reader that is arranged for reading the identification code from the RFID tag.

Optionally, the display is a bi-stable display.

Optionally, the interactive terminal includes a gesture sensing system for providing a user interface and for detecting one or more gestures performed by a user.

Optionally, the location is a towel dispenser attached to a structure. Alternatively, optionally, the location is a wall.

Embodiments of the present disclosure substantially eliminate or at least partially address the aforementioned problems in the prior art, and facilitate an easy-to-implement registration process for registering interactive terminals to corresponding locations, and enable delivery of location-specific content items to the interactive terminals.

Additional aspects, advantages, features and objects of the present disclosure would be made apparent from the drawings and the detailed description of the illustrative embodiments construed in conjunction with the appended claims that follow,

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following drawings wherein:
Fig. 1 is a schematic illustration of a system for registering interactive terminals to locations, in accordance with an embodiment of the present disclosure;
Fig. 2 is a schematic illustration of a one-dimensional array of interactive terminals, in accordance with an embodiment of the present disclosure;
Fig. 3 is a schematic illustration of a two-dimensional array of interactive terminals, in accordance with an embodiment of the present disclosure;
Fig. 4 is a schematic illustration of an example RFID tag, in accordance with an embodiment of the present disclosure;
Figs. 5A and 5B collectively are an illustration of steps of a method of registering an interactive terminal to a location, in accordance with an embodiment of the present disclosure;
Figs. 6A, 6B and 6C collectively are an illustration of steps of a detailed method of registering an interactive terminal to a location, in accordance with an embodiment of the present disclosure;
Fig. 7 is s schmatic illustration of a system according to the present disclosure; and
Fig. 8 is an exemplary schematic flow chart according to as aspect of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although the best mode of carrying out the present disclosure has been disclosed, those skilled in the art would recognize that other embodiments for carrying out or practicing the present disclosure are also possible.

A typical method of registering an interactive terminal to a location comprises the steps of
a) detecting a coupling of the interactive terminal to the location;
b) detecting an identification code associated with the location;
c) communicating the identification code to a server arrangement;
d) selecting, at the server arrangement, a content item based on the identification code associated with the location;
e) receiving the content item from the server arrangement; and
f) presenting the content item on a display of the interactive terminal.

According to an embodiment, the steps a) and b) are performed by using a Radio-Frequency IDentification (RFID) reader of the interactive terminal. The method may also further comprise the step of verifying, at the server arrangement, a response related to the content item presented on the display, wherein the response is selected from the group consisting of
- one or more gestures detected by a user interface of the interactive terminal;
- an image of the content item presented on the display of the interactive terminal; and
- a communication from a verification device.

According to yet another embodiment, the content item presented on the display includes a visual representation. The image of the content item may be captured with a camera of the verification device.A typical interactive terminal comprises
- means for attaching the interactive terminal to a location;
- a processor;
- a memory coupled to the processor, the memory storing computer-readable program code;
- a reader coupled to the processor;
- a communication interface coupled to the processor; and
- a display coupled to the processor,
wherein, when executed on the processor, the computer-readable program code is configured to
- employ the reader to detect an identification code associated with the location,
- communicate the identification code to a server arrangement, via the communication interface,
- receive a content item from the server arrangement, via the communication interface, wherein the content item is indicative of the location, and
- present the content item on the display.

According to an embodiment, the identification code is stored in a Radio-Frequency IDentification (RFID) tag attached to the location, and wherein the reader is an Radio-Frequency IDentification reader that is arranged for reading the identification code from the Radio-Frequency IDentification tag.

According to another embodiment, the display is a bi-stable display. The terminal may also further comprise a gesture sensing system for providing a user interface and for detecting one or more gestures performed by a user.

The location may be a towel dispenser attached to a structure. The location may also be a wall.

A typical system comprises
- a server arrangement;
- a location with an associated identification code; and
- an interactive terminal coupled in communication with the server arrangement, the interactive terminal having a terminal identifier, wherein the interactive terminal is configured to detect the identification code associated with the location, and to communicate the identification code and the terminal identifier to the server arrangement,
wherein the server arrangement is configured to generate registration information from the identification code and the terminal identifier to register the interactive terminal to the location, and wherein the server arrangement is configured to communicate a content item to the interactive terminal based on the registration information.

According to an embodiment, the server arrangement is configured to populate a database with the identification code and the terminal identifier to store the registration information.

According to another embodiment, the identification code is stored in a Radio-Frequency IDentification (RFID) tag attached to the location, and the interactive terminal comprises a Radio-Frequency IDentification reader that is arranged for reading the identification code from the Radio-Frequency IDentification tag.

The location may be a towel dispenser attached to a structure or it may be a wall. The server arrangement may also be configured to verify a response related to the content item communicated to the interactive terminal.

According to an embodiment, the system is such that the response is selected from the group consisting of
- one or more gestures detected by a user interface of the interactive terminal
- an image of the content item presented on a display of the interactive terminal and
- a communication from a verification device.

The system may be implemented in various ways, depending on various possible scenarios. In one example, the system may be implemented by way of a spatially collocated arrangement of the server arrangement and the database. In another example, the system may be implemented by way of a spatially distributed arrangement of the server arrangement and the database coupled mutually in communication via a communication network, such as the communication network. In yet another example, the server arrangement and the database may be implemented via cloud-based computing services.

The communication network couples the interactive terminal to the server arrangement, and provides a communication medium between the interactive terminal and the server arrangement for exchanging data amongst themselves. The communication network used in the present system and method can be a collection of individual networks, interconnected with each other and functioning as a single large network. Such individual networks may be wired, wireless, or a combination thereof. Examples of such individual networks include, but are not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, satellite-based telecommunication networks, Worldwide Interoperability for Microwave Access (WiMAX) networks, and short-range wireless communications network, such as a "Bluetooth" network ("Bluetooth" is a registered trademark).

Optionally, the location is an object attached to a structure. Examples of the object include, but are not limited to, a towel dispenser, a coffee machine, a chewing gum machine, and a snacks vending machine. In an example, the structure is a wall on which the object is mounted. An interactive terminal attached to a towel dispenser has been described in respect of a US patent application 14/269,379, hereby incorporated by reference. Moreover, an example interactive terminal is described below.

Alternatively, optionally, the location is a wall, for example, such as a wall of a room or a hallway.

During installation, the interactive terminal is attached to the location. For this purpose, the interactive terminal includes means for attaching the interactive terminal to the location. The means for attaching may for example include any suitable mechanical coupling means, such as a snap-fit joint, screws, glue and so forth.

Moreover, the location has an identification code associated therewith, while the interactive terminal has a terminal identifier associated therewith.

Furthermore, the interactive terminal includes a reader for detecting the identification code associated with the location. Optionally, the identification code is stored in an RFID tag attached to the location, and the reader is an RFID reader that is arranged for reading the identification code from the RFID tag. The RFID reader is preferably positioned in such a way that when the interactive terminal is physically attached to the location, the RFID reader is able to read information stored in the RFID tag. Accordingly, the RFID reader may be positioned in a proximity of the RFID tag. The RFID tag may be for example a 13.56 MHz RFID tag. Optionally, the RFID tag includes human-readable information printed on its outer surface. The human-readable information potentially allows an installer to confirm whether he/she is installing an interactive terminal at a correct location.

Alternatively or additionally, optionally, the RFID tag includes machine-readable information, for example, such as a QR code. The installer can employ his/her verification device to read the machine-readable information, to confirm whether he/she is installing the interactive terminal at the correct location. For purposes of reading the machine-readable information, the verification device could be a portable device having a camera, QR-code reader software, connectivity to the server arrangement, and optionally, an RFID-reader. Examples of the verification device include, but are not limited to, a mobile phone, a smart telephone, an MID, a tablet computer, a UMPC, a phablet computer, a PDA, a web pad, and a handheld PC.

During registration of the interactive terminal, the interactive terminal (namely, a processor or a controller associated therewith) is configured to communicate the terminal identifier and the identification code associated with the location to the server arrangement, via the communication network.

Moreover, the server arrangement is configured to generate registration information from the identification code and the terminal identifier to register the interactive terminal. Optionally, the server arrangement is configured to populate the database with the identification code and the terminal identifier to store the registration information.

Moreover, the server arrangement is configured to select a content item based on the registration information, and to communicate the content item to the interactive terminal. The interactive terminal (namely, the processor or the controller associated therewith) is configured to present the content item received from the server arrangement on a display of the interactive terminal. Furthermore, optionally, the server arrangement is configured to verify a response related to the content item communicated to the interactive terminal.

Optionally, in a first verification process, the response related to the content item is verified by one or more gestures performed by a person who installed the interactive terminal at the location (hereinafter referred to as *"installer"*). In an example, the content item includes one or more instructions for the installer to perform the one or more gestures. The interactive terminal (namely, the processor or the controller associated therewith) is configured to detect the one or more gestures performed by the installer. In this regard, the interactive terminal is configured to employ a gesture sensing system as described below.

The interactive terminal (namely, the processor or the controller associated therewith) is configured to communicate information pertaining to the detected gestures to the server arrangement. Subsequently, the server arrangement determines whether or not the one or more gestures have been performed as per the one or more instructions included within the content item. If it is determined that the one or more gestures have been performed as per the one or more instructions, the server arrangement verifies the response related to the content item, and registers the interactive terminalto the location successfully.

Alternatively, in a second verification process, the response related to the content item is verified by an image of the content item as presented on the display of the interactive terminal. In an example, the installer captures the image of the content item using a camera of his/her verification device, and sends the image to the server arrangement. Subsequently, the server arrangement compares the image received from the installer's verification device with the content item, and determines whether or not the image matches the content item. If the image matches the content item, the server arrangement verifies the response related to the content item, and registers the interactive terminal to the location successfully.

Yet alternatively, in a third verification process, the response related to the content item is verified by a communication from the verification device. In an example, the display of the interactive terminal presents a Quick Response (QR) code, for example, included within the content item. The installer uses his/her verification device to scan the QR code, and sends information related to the QR code to the server arrangement. If the information related to the QR code matches the content item, the server arrangement verifies the response related to the content item, and registers the interactive terminal to the location successful.

For purposes of the second and/or third verification process, the verification device could be a portable device having a camera, QR-code reader software, connectivity to the server arrangement, and optionally, an RFID-reader. Examples of the verification device used by the installer include, but are not limited to, a mobile phone, a smart telephone, a Mobile Internet Device (MID), a tablet computer, an Ultra-Mobile Personal Computer (UMPC), a phablet computer, a Personal Digital Assistant (PDA), a web pad, and a handheld Personal Computer (PC).

Upon the successful registration of the interactive terminal, the server arrangement sends location-specific content items to the interactive terminal, namely, content items that are most suited for the location. For this purpose, the server arrangement is configured to select the location-specific content items based on the location to which the interactive terminal is registered, namely based on the identification code associated with the location as stored in the database.

For illustration purposes only, there will now be considered an example where the location is a towel dispenser installed at a ladies washroom in a public area, such as a shopping mall. In such a case, the location-specific content items sent by the server arrangement could include advertisements that are particularly directed to a female population, and the interactive terminal could then be used to display these advertisements.

Moreover, optionally, the interactive terminal is configured to collect statistical data pertaining to presentation of content items on the display and/or user interaction with the interactive terminal. Optionally, the statistical data pertains to at least one of:
(A) a number of times a given content item has been presented on the display and associated time stamps;
(B) a number of user interactions, namely, a number of users who interacted with the interactive terminal, and associated time stamps; and/or
(C) a duration of each user interaction.

Optionally, the interactive terminal is configured to send the statistical data to the server arrangement from time-to-time. This enables the server arrangement to analyse the statistical data, for example, to determine most popular content items, namely content items that are most popular amongst users. This is potentially beneficial for publishers and/or creators of these content items.

As the interactive terminal is registered to the location, the statistical data collected by the interactive terminal is also indicative of the location. This potentially enables the server arrangement to identify trends and patterns, in behaviour of users, specific to the location.

The system is particularly suitable for location-specific content delivery and/or on-site advertising, namely for applications out of home. The system is in particular also suitable for use in hygiene-sensitive locations.

Furthermore, optionally, the system is suitable for implementing various applications. In one implementation, a one-dimensional (1D) or a two-dimensional (2D) array of interactive terminals is installed at a given location, for example, such as a wall. In this implementation, the server arrangement is configured to store information pertaining to the 1 D or 2D array, for example, including an order in which the interactive terminals are arranged to form the 1 D or 2D array. This potentially enables the server arrangement to communicate to each of these interactive terminals a corresponding content item, such that when these interactive terminals present their corresponding content items on their displays substantially simultaneously, these content items together form a single, large visual presentation or a continuous piece of information.

Moreover, it is beneficial to define an exact order of arrangement of the interactive terminals for various purposes, for example, such as for monitoring usage statistics of a precise location in a washroom, for directing a service staff to a device requiring a service or a replacement, and for presenting interdependent information on adjacent interactive displays. The interdependent information may, for example, include numbers in an ascending order, letters in an alphabetic order, or a picture of a known nature, such as a circle.

Moreover, it is advantageous to define the order in which the interactive terminals are arranged in a compact, error-free manner. For example, a description like "*the second device on the eastern wall - which is on the righf-hand side when entering the washroom"* is lengthy and prone to cause errors. When a given interactive terminal of the 1D or 2D array requires a service or a replacement, the server arrangement optionally sends an appropriate content item to the given interactive terminal. When presented on the given interactive terminal, the appropriate content item directs a service staff to the given interactive terminal. Alternatively or additionally, optionally, the order of arrangement of the interactive terminals is optionally represented by presenting interdependent information on the 1 D or 2D array, as will be elucidated below.

The system may also comprise a one-dimensional array of two separate interactive terminals, a first terminal and a second terminal. The first and second interactive terminals could be implemented in a manner that is similar to the implementation of the interactive terminal as described above, when there is only one terminal.

As a part of the example verification process, the server arrangement optionally sends a first content item and to the first interactive terminal and a second content item to the second interactive terminal, which content items are intended to be displayed in a desired order, namely an alphabetical order. In the description below, content items refers to first and second content item and interactive terminals or terminals refers to the first and second interactive terminal.

Subsequently, the content items and are presented on corresponding displays of the interactive terminals. The content items and may for example include alphabets 'B' and 'A', respectively. If the content items and are not displayed in the alphabetical order, this indicates that an order of arrangement of the interactive terminals and, for example, as stored in the database is wrong. A correction of the order of arrangement of the interactive terminals is optionally performed as elucidated below.

The installer uses the camera of his/her verification device to capture, in a single image, the content items and as presented on the interactive terminals. The installer then sends the image to the server arrangement.

The server arrangement analyses the image to identify that the order of arrangement of the interactive terminals is wrong. Subsequently, the server arrangement corrects the registration information corresponding to the interactive terminals, namely an order of arrangement of the interactive terminals as defined in the registration information. In an example, the registration information is corrected by defining a correct order of arrangement of the interactive terminals in the database. As a result, changing a physical arrangement of the interactive terminals is not required.

Upon correction, the server arrangement repeats the verification process until the interactive terminals display content items in the desired order.

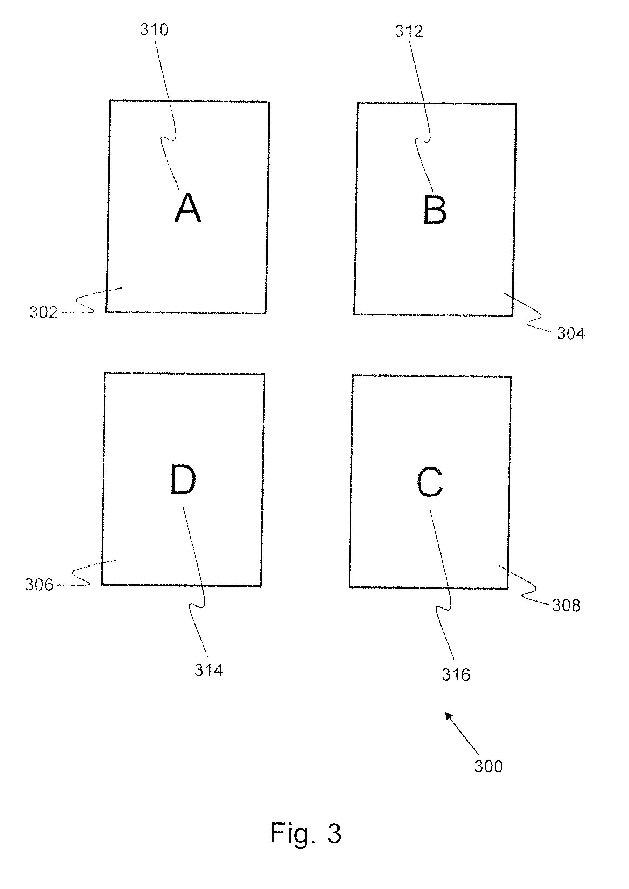

A similar procedure is applied irrespective of the number of interactive terminals. An example with a two-dimensional array of interactive terminals is given below in connection with Figure 3. Moreover, for example, a 1D or 2D array can include any number of interactive terminals. Optionally, in an alternative implementation, only one of the interactive terminals of the 1 D or 2D array is registered to a given location, and is used as a reference point for the 1D or 2D array. It is to be noted that the term "location" in this description refers to an object to which an interactive terminal is attached, while the term "geographical location" refers to a geographical location where the object is positioned, throughout the present disclosure. Optionally, the geographical location includes World Geodetic System 1984 (WGS 84) coordinates used by Global Positioning System (GPS). Additionally or alternatively, the geographical location includes position coordinates in a local coordinate system defined for a premises, for example, such as a building.

### DETAILED DESCRIPTION OF THE DRAWINGS

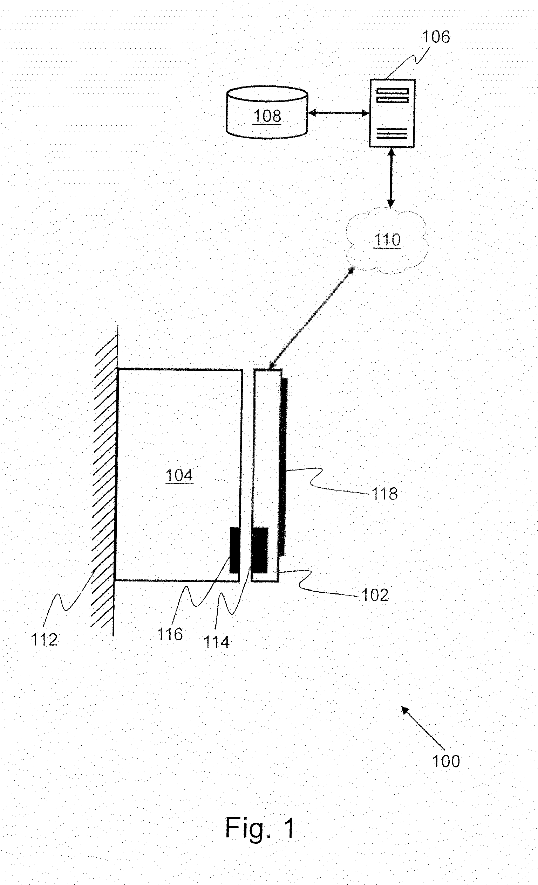

Fig. 1 is a schematic illustration of a system **100** for registering interactive terminals to locations, in accordance with an embodiment of the present disclosure. The system **100** includes one or more interactive terminals, depicted as an interactive terminal **102** in Fig. 1, one or more locations, depicted as a location **104** in Fig. 1, a server arrangement **106**, a database **108** associated with the server arrangement **106**, and a communication network **110**. In Fig. 1, there is shown a side view of the interactive terminal **102** and the location **104**. In this embodiment, the location **104** is an object attached to a structure **112**, which structure is a wall. The system also comprises a display **118** configured to present the content item received from the server arrangement **106.**

Moreover, the location **104** has an identification code associated therewith, while the interactive terminal **102** has a terminal identifier associated therewith.

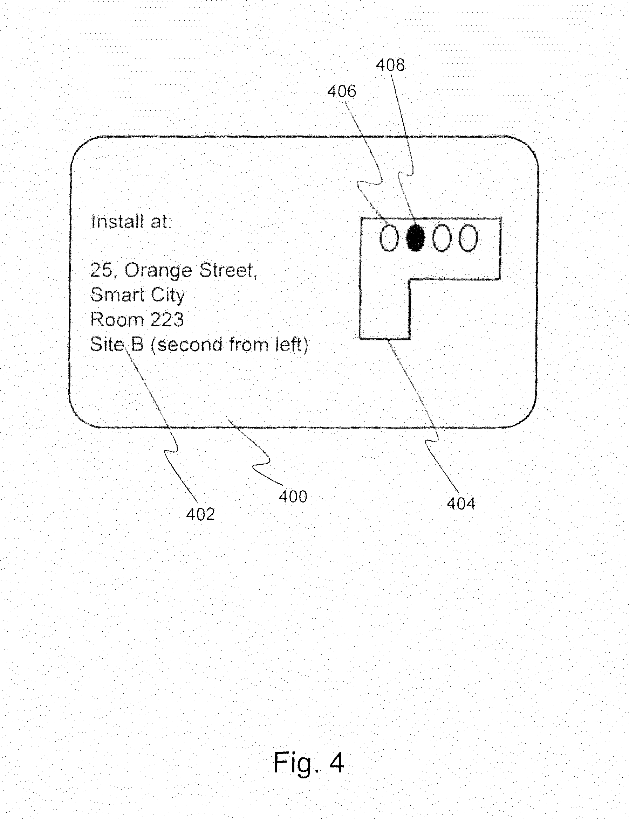

Furthermore, the interactive terminal **102** includes a reader **114** for detecting the identification code associated with the location **104.** In this embodiment, the identification code is stored in an RFID tag **116** attached to the location **104,** and the reader **114** is an RFID reader that is arranged for reading the identification code from the RFID tag **116.** The RFID reader is positioned in such a way that when the interactive terminal **102** is physically attached to the location **104**, the RFID reader is able to read information stored in the RFID tag **116**. Accordingly, the RFID reader is positioned in a proximity of the RFID tag **116**, as shown in Fig. 1. An example RFID tag has been illustrated in conjunction with Fig. 4.
Fig. 1 is merely an example, which should not unduly limit the scope of the claims herein. It is to be understood that the specific designation for the system **100** is provided as an example and is not to be construed as limiting the system **100** to specific numbers, types, or arrangements of interactive terminals, locations, server arrangements, databases, and communication networks. A person skilled in the art will recognize many variations, alternatives, and modifications of embodiments of the present disclosure.

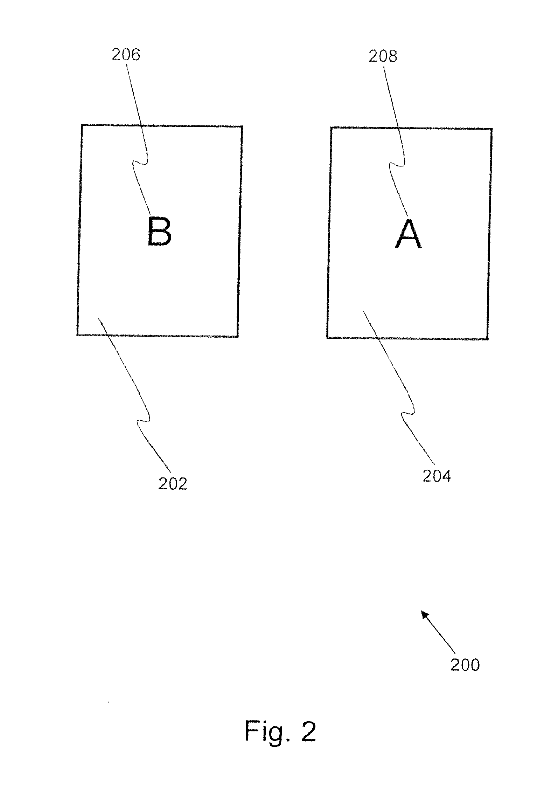

Fig. 2 is a schematic illustration of a one-dimensional array **200** of interactive terminals **202** and **204**, in accordance with an embodiment of the present disclosure. The interactive terminals **202** and **204** could be implemented in a manner that is similar to the implementation of the interactive terminal **102** as described in conjunction with Fig. 1. In Fig. 2, there is shown an example verification process associated with the registration of the interactive terminals **202** and **204**. Each terminal displays content items, such as **206** and **208**.
Fig. 3 is a schematic illustration of a two-dimensional array **300** of interactive terminals **302**, **304**, **306** and **308**, in accordance with an embodiment of the present disclosure. The interactive terminals **302**, **304**, **306** and **308** could be implemented in a manner that is similar to the implementation of the interactive terminal **102** as described in conjunction with Fig. 1. In Fig. 3, there is shown an example verification process associated with the registration of the interactive terminals **302**, **304**, **306** and **308**.

As a part of the example verification process, the server arrangement **106** optionally sends content items **310**, **312**, **314** and **316** to the interactive terminals **302**, **304**, **306** and **308**, respectively, that are intended to be displayed in a desired order, namely an alphabetical order.

Subsequently, the content items **310**, **312**, **314** and **316** are presented on corresponding displays of the interactive terminals **302**, **304**, **306** and **308**, respectively. The content items **310**, **312**, **314** and **316** include alphabets 'A', 'B', 'D' and 'C', respectively, as shown in Fig. 3. As the content items **314** and **316** are not displayed in the alphabetical order, this indicates that an order of arrangement of the interactive terminals **306** and **308**, for example, as stored in the database **108** is wrong. A correction of the order of arrangement of the interactive terminals **306** and **308** is optionally performed as elucidated below.

The installer uses the camera of his/her verification device to capture, in a single image, the content items **310**, **312**, **314** and **316** as presented on the interactive terminals **302**, **304**, **306** and **308**, respectively. The installer then sends the image to the server arrangement **106**.

The server arrangement **106** analyses the image to identify that the order of arrangement of the interactive terminals **302** and **304** is correct, while the order of arrangement of the interactive terminals **306** and **308** is wrong. Subsequently, the server arrangement **106** corrects the registration information corresponding to the interactive terminals **306** and **308**, namely an order of arrangement of the interactive terminals **306** and **308** as defined in the registration information. As a result, changing a physical arrangement of the interactive terminals **306** and **308** is not required.

Upon correction, the server arrangement **106** repeats the verification process until the interactive terminals **302**, **304**, **306** and **308** display content items in the desired order.

Figs. 2 and 3 are merely examples, which should not unduly limit the scope of the claims herein. A person skilled in the art will recognize many variations, alternatives, and modifications of embodiments of the present disclosure.

Fig. 4 is a schematic illustration of an example RFID tag **400**, in accordance with an embodiment of the present disclosure. The RFID tag **400** could be implemented in a manner that is similar to the implementation of the RFID tag **116** as described in conjunction with Fig. 1. Moreover, the RFID tag **116** could be implemented in a manner that is similar to the RFID tag **400**.

The RFID tag **400** is suitable for attachment to a given location, and stores an identification code associated with the given location. When an interactive terminal is attached to the given location, an RFID reader of the interactive terminal is operable to read the identification code stored in the RFID tag **400**.

With reference to Fig. 4, the human-readable information includes a text **402** and a graphic **404** printed on the outer surface of the RFID tag **400.** The text **402** pertains to a description of the given location, for example, including an address of the given location, The graphic **404** pertains to a map showing a position of the given location in a room. In the graphic **404**, four locations within the room are denoted by four markers **406**, while the given location of the RFID tag **400** is denoted by a highlighted marker **408**.

Fig. 4 is merely an example, which should not unduly limit the scope of the claims herein. A person skilled in the art will recognize many variations, alternatives, and modifications of embodiments of the present disclosure.

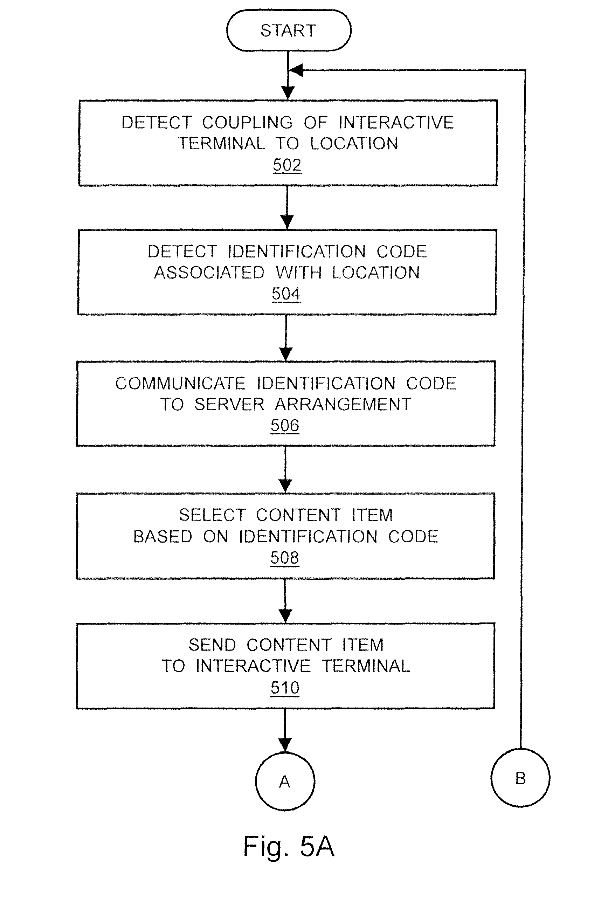

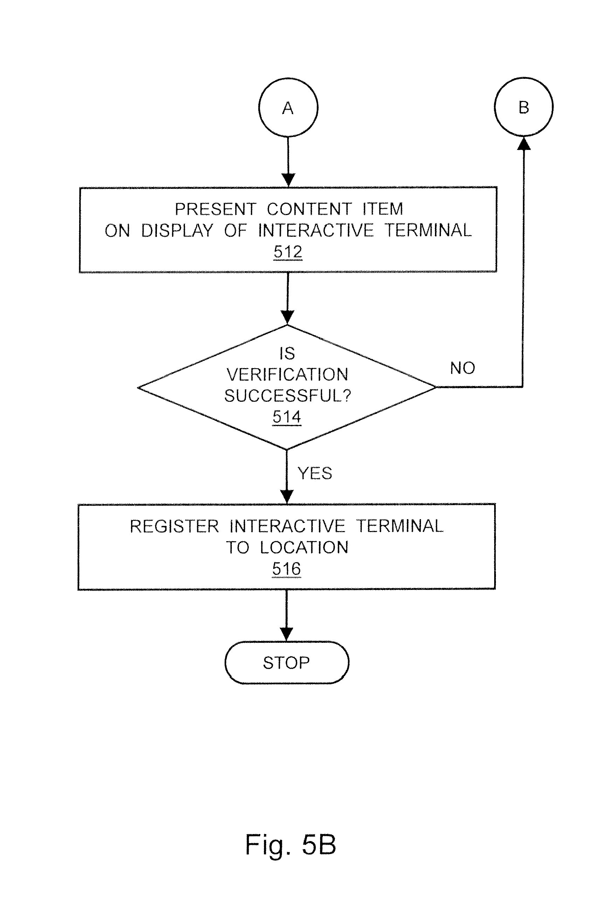

Figs. 5A and 5B collectively are an illustration of steps of a method of registering an interactive terminal to a location, in accordance with an embodiment of the present disclosure. The method is depicted as a collection of steps in a logical flow diagram, which represents a sequence of steps that can be implemented in hardware, software, or a combination thereof.

At a step **502**, the interactive terminal detects its coupling to the location.

At a step **504**, the interactive terminal detects an identification code associated with the location.

The steps **502** and **504** are optionally performed by using an RFID reader of the interactive terminal that is arranged for reading an RFID tag attached to the location.

Subsequently, at a step **506**, the interactive terminal communicates the identification code to a server arrangement.

Thereafter, at a step **508**, the server arrangement selects a content item based on the location to which the interactive terminal is attached, namely based on the identification code associated with the location.

Subsequently, at a step **510**, the server arrangement sends the content item selected at the step **508** to the interactive terminal, which then receives the content item.

At a step **512**, the interactive terminal presents the content item received at the step **510** on its display.

Next, at a step **5141**, the server arrangement verifies a response related to the content item presented on the display of the interactive terminal. As described in conjunction with Fig. 1, the response is verified by at least one of:
(i) one or more gestures detected by a user interface of the interactive terminal;
(ii) an image of the content item presented on the display of the interactive terminal; and/or
(iii) a communication from a verification device.

In accordance with the step **514**, the server arrangement determines whether or not a verification process for registering the interactive terminal to the location is successful.

If, at the step **514**, it is determined that the verification process is successful, a step **516** is performed. At the step **516**, the server arrangement generates registration information from the identification code associated with the location and a terminal identifier of the interactive terminal to register the interactive terminal to the location. Optionally, in accordance with the step **506**, the interactive terminal communicates its terminal identifier in addition to the identification code to the server arrangement. Alternatively, optionally, in accordance with the step **516**, the server arrangement assigns the terminal identifier to the interactive terminal.

If, at the step **514**, it is determined that the verification process is unsuccessful, a registration process restarts at the step **502**.

The steps **502** to **516** are only illustrative and other alternatives can also be provided where one or more steps are added, one or more steps are removed, or one or more steps are provided in a different sequence without departing from the scope of the claims herein.

Embodiments of the present disclosure provide a computer program product comprising a non-transitory computer-readable data storage medium having stored thereon computer-readable program code, which is executable by a processing hardware of the system **100** to implement the method as described in conjunction with Figs. 5A-B.

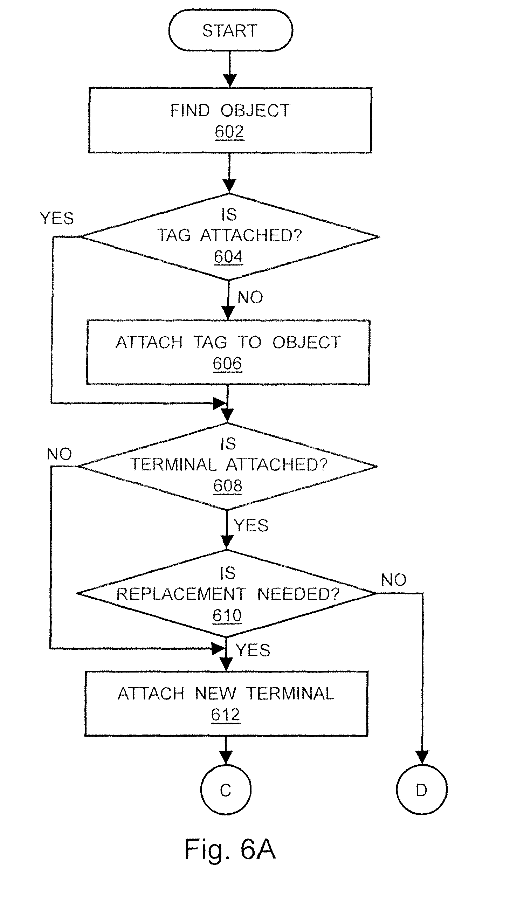

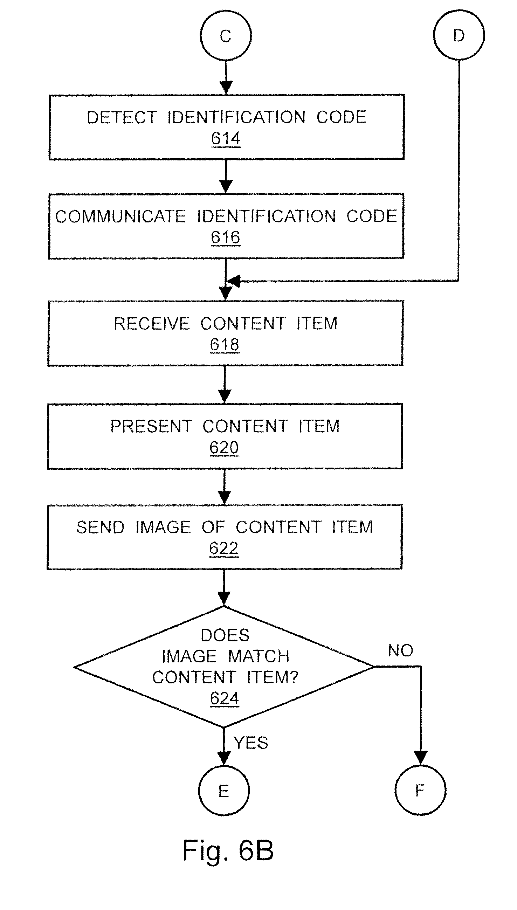

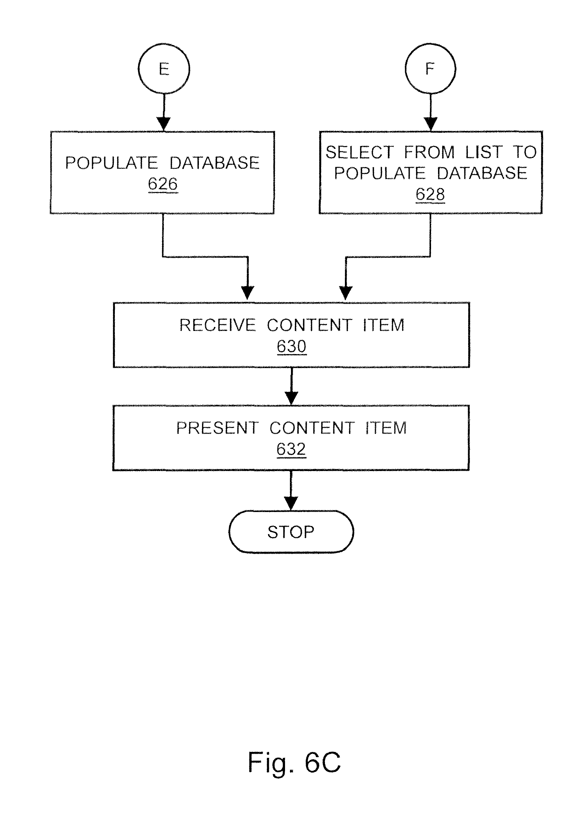

Figs. 6A, 6B and 6C collectively are an illustration of steps of a detailed method of registering an interactive terminal to a location, in accordance with an embodiment of the present disclosure. The method is depicted as a collection of steps in a logical flow diagram, which represents a sequence of steps that can be implemented manually by a user or automatically in hardware, software, or a combination thereof.

Initially, at a step **602**, an installer goes to a geographical location and finds an object at which an interactive terminal is to be installed. The object is associated with a location.

Next, at a step **604**, the installer checks whether or not an appropriate tag is attached to the object. If, at the step **604**, the installer finds that no tag is attached to the object, a step **606** is performed. Otherwise, if the installer finds that an appropriate tag is attached to the object, a step **608** is performed.

At the step **606**, the installer attaches at least one tag to an appropriate place on the object. The tag may be either preconfigured to a geographical location of the object or may be blank. Optionally, the tag is an RFID tag storing an identification code associated with the object. Optionally, the tag includes printed information indicative of the geographical location of the object. This information may be either human-readable or machine-readable. The printed information potentially allows the installer to verify that the tag is attached at a correct geographical location.

Thereafter, at the step **608**, the installer checks whether or not an interactive terminal is attached to the object.

If, at the step **608**, the installer finds that an interactive terminal is attached to the object, a step **610** is performed. At the step **610**, the installer checks whether or not the interactive terminal requires a replacement. The interactive terminal requires a replacement if it does not work properly or is scheduled to be replaced.

If, at the step **610**, the installer finds that the interactive terminal requires a replacement, a step **612** is performed. Otherwise, if there is no need to replace, a verification process is optionally performed as described in conjunction with steps **618** to **632**.

If, at the step **608**, the installer finds that no interactive terminal is attached to the object, the step **612** is performed.

At the step **612**, a new interactive terminal is attached to the object, and a registration process begins. Optionally, when attached to the object, the interactive terminal turns on and starts the registration process automatically, Alternatively, optionally, the interactive terminal is turned on manually after it is attached to the object.

Thereafter, at a step **614**, the interactive terminal detects the identification code associated with the object. The step **614** is optionally performed by using an RFID reader of the interactive terminal that is arranged for reading the identification code from the RFID tag attached to the object.

Subsequently, at a step **616**, the interactive terminal communicates the identification code to a server arrangement, such as the server arrangement **106**, via a communication network. Additionally, optionally, the interactive terminal communicates other information, for example, such as a terminal identifier of the interactive terminal, a Cell IDentity (CID) of a mobile network used by the interactive terminal, information about possible radio networks, and so forth. Such information can be used by the server arrangement, for example, to verify the geographical location of the interactive terminal.

Consequently, at a step **618**, the server arrangement selects a content item based on the geographical location of the object, and sends the selected content item to the interactive terminal. Optionally, the content item includes unique graphical and/or textual information, for example, such as a figure, a map, a QR code, a text, letters, numbers, and the like.

At a step **620**, the interactive terminal presents the content item received at the step **618** on its display. The unique graphical and/or textual information included in the content item optionally includes a description of the geographical location of the interactive terminal fetched from the database **108**. For example, a description, such as *"Shell petrol station, <<address>>, 2nd floor, men's restroom, towel dispenser, first on the left",* potentially enables the installer to verify whether or not the registration process of the interactive terminal is successful.

Accordingly, at a step **622**, the installer verifies that the unique graphical and/or textual information matches the geographical location where the interactive terminal has been installed, for example, by using his/her verification device. Optionally, a verification process is performed by using an image of the content item, as described earlier in conjunction with Figs. 1, 2 and 3. In this regard, the installer captures an image of the content item using a camera of his/her verification device, and sends the image to the server arrangement. Optionally, in addition to the image, the verification device also sends its own geographical location. Optionally, the geographical location of the verification device is determined by employing at least one of: a GPS sensor of the verification device, cellular triangulation, a CID of the verification device, a Wi-Fi location, and/or a Bluetooth location.

Subsequently, at a step **624**, the server arrangement determines whether or not the image received at the step **622** matches the content item sent at the step **618**. As there might be more than one interactive terminal being installed and registered at a same time, the image received at the step **622** is compared with all previously-sent content items that have not been confirmed by the time the step **624** is performed.

If, at the step **624**, it is determined that the image matches the content item, a step **626** is performed. At the step **626**, the server arrangement populates the database with the geographical location, the identification code associated with the object, and the terminal identifier of the interactive terminal.

If, at the step **624**, it is determined that the image does not match the content item, a step **628** is performed. At the step **628**, the server arrangement sends, to the verification device, a list of possible geographical locations in a proximity of the geographical location of the verification device. In accordance with the step **628**, the installer selects a correct geographical location from the list of possible geographical locations. As a result, the server arrangement populates the database with the correct geographical location selected by the installer, the identification code associated with the object, and the terminal identifier of the interactive terminal.

It will be appreciated that it is not necessary to associate an RFID tag with a geographical location prior to installation and registration of an interactive terminal. As elucidated with respect to the step **628**, the RFID tag can be associated with the geographical location and the interactive terminal, during the installation and registration of the interactive terminal.

Next, at a step **630**, the server arrangement sends a content item to the interactive terminal, wherein the content item is indicative of a successful registration of the interactive terminal.

At a step **632**, the interactive terminal presents the content item received at the step **630** on its display. This informs the installer about the successful registration of the interactive terminal.

In this manner, the interactive terminal is registered to the location automatically, without a need for being pre-configured to the location.

The steps **602** to **632** are only illustrative and other alternatives can also be provided where one or more steps are added, one or more steps are removed, or one or more steps are provided in a different sequence without departing from the scope of the claims herein. In an alternative embodiment, the verification process described in conjunction with the steps **618** to **632** is not performed, and the registration process is completed at the step **616**.

In yet another alternative embodiment, a verification process is performed without any verification device. In such a case, the verification process is optionally performed by one or more gestures performed by the installer, for example, as described in the first verification process described in conjunction with Fig. 1. Thus, the installer verifies visually that a content item presented on the display of the interactive terminal pertains to the geographical location where the interactive terminal is installed, and by performing the one or more gestures as instructed in the content item.

In still another alternative embodiment, the installer employs his/her verification device to read the RFID tag or a QR code printed on the tag, and to send information read from the RFID tag or the QR code to the server arrangement. Subsequently, a dedicated test interface to the server arrangement is opened on the verification device. This potentially enables the installer to check whether or not data communication between the interactive terminal and the server arrangement is working properly. In this regard, the installer is optionally notified about an establishment of a correct bi-directional data communication between the interactive terminal and the server arrangement, using the display of the interactive terminal and/or a display of the verification device. Moreover, optionally, the verification process prompts, on the display of the interactive terminal and/or the display of the verification device, the installer to perform a certain test sequence, for example, such as pulling a towel from a towel dispenser, making swipe gestures, and so forth. If the installer performs the test sequence correctly, the installer is notified about the successful registration of the interactive terminal, using the display of the interactive terminal and/or the display of the verification device.

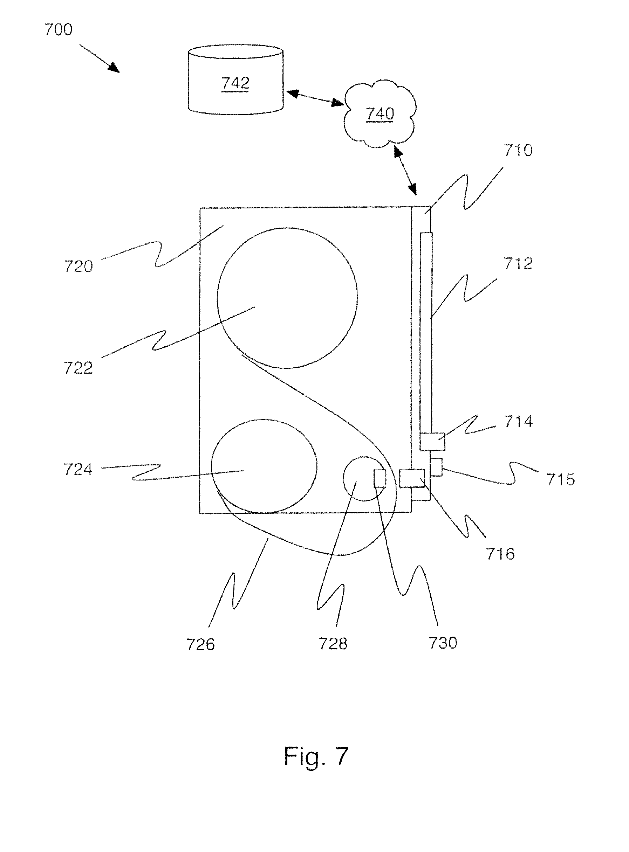

In Fig. 7 a system **700** according to other aspects of the present disclosure is illustrated, An exemplary towel dispenser **720** is used to dispense towel **726**. An unused part of the towel 726 is stored in upper roll **722**. As the user pulls the towel **726**, it is dispensed from the upper roll **722**. The towel **726** moves rotating gear **728** while it is pulled. A permanent magnet **730** is connected to the rotating gear **728**. The permanent magnet **730** moves with the gear **728** as the towel 726 is pulled. The used part of the towel is collected by lower roll **724**. A terminal **710** is connected to front face of the towel dispenser **720.** The terminal **710** may be interactive and may include a bi-stable display **712** for displaying content for the user. The content can be delivered to the terminal **710** via a communication network **740**, such as the Internet from a service running in server system **742**. The content can be delivered to the terminal **710** in real time or before the content is used (i.e. caching, for example, two or more figures / pictures to be shown in the display **712**). A sensor, for example, a Hall-sensor, reed switch or other suitable sensing device **716** detects movement of the magnet **730**. As the movement is detected the terminal **710** is configured to alter / change information content in the display **712.** Additionally LED(s) **715** can be turned on or flashed to attract the users' attention. The movement detection can also be used to turn on a proximity detector/sensor **714** (such as an infra-red (IR) detector) in order to have a touchless user interface for the terminal **710**. The touchless user interface can be realized by several techniques based on detection of the electromagnetic waves. The interface may be based on the active, i.e. transceiving, or passive, i.e. receiving, approaches. An example of the passive approaches are the Passive Infrared Radiation (PIR) sensors which can detect the IR radiation by the users' body or body part. In the active approaches the selected electromagnetic wavelength is emitted and the back-scattered signal is measured. The used wavelengths include, but are not limited to, the visible, near-infrared or infrared wavelengths or the longer radio wavelengths. In at least one embodiment, the touchless interface may be based on reflectance IR approach where the light, emitted from one or more IR LEDs and reflected by user's hand, is measured using an IR sensor. The advantages of such an IR reflectance approach include low power consumption via short IR pulses, insensitivity to user wearing gloves and functionality through thick protective fronts such as Plexiglas. A user in the front of the terminal **710** can change information content in the display **712** by performing one or more predetermined gestures in the proximity of the detector **714**.* Additionally, LED(s) **715** can be flashed as the user performs a gesture to indicate a successful gesture. This is beneficial since some of the bi-stable displays have a slow response time. It might take 1-2 seconds to refresh the display. By flashing the lights the user knows that the gesture will have an impact on the information content to be displayed in the display **712**. In one or more embodiments, the proximity detector **714** can be utilized independently of the magnetic sensor **716**. The proximity sensor can be turned OFF after a time out if desired.

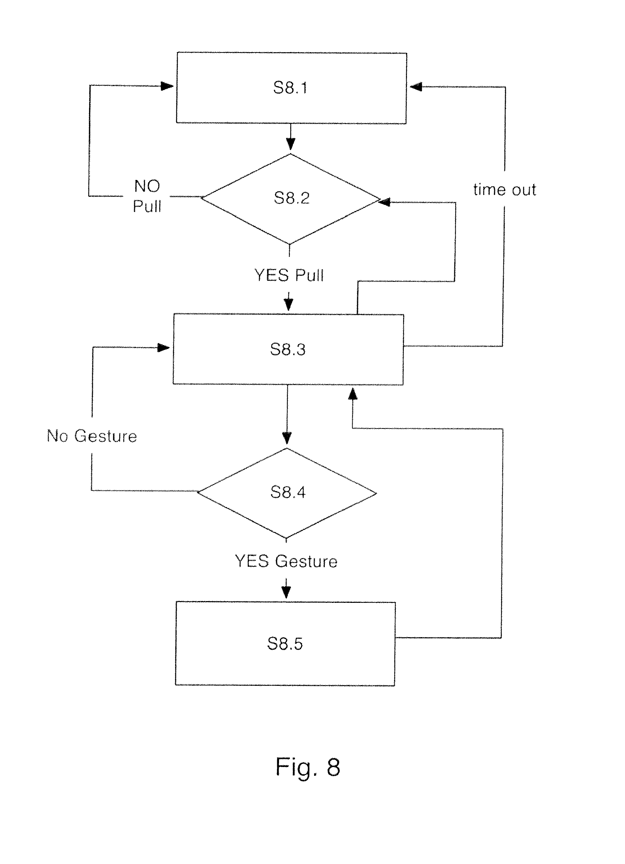

Fig. 8 an exemplary schematic flow chart according to one or more aspects of the present disclosure. In this example, the terminal **710** may be attached to a towel dispenser **720** of Fig. 7. In step S8.1 the terminal **710** is in a first mode. In the first mode the bi-stable display shows default content or a last displayed portion of content. The proximity sensor **714** is turned OFF. In step S8.2 a signal from magnetic sensor **716** is analyzed. If there is no movement detected the process goes back to step S8.1. If movement is detected the process goes to step S8.3 and the terminal **710** is configured to be in a second mode. In step S8.3 proximity sensor **714** is turned ON. Additionally information content in the display **712** can be changed and other audio or visual content such as flashing LED's **715** can be presented. In step S8.4 a signal from proximity detector **714** is analyzed. If there is no gesture detected the process goes back to step S8.3. If no gestures are detected after a predetermined time out the process goes further back to step S8.1 and returns to the first mode. If there is a gesture such as movement of a hand from left to right, new content is shown in the display **712** (step S8.5.). The process goes back to step S8.3 to continue in the second mode. The process can be configured to detect further gestures or further pulls of the towel when in the second mode.

Embodiments of the present disclosure are susceptible to being used for various purposes, including, though not limited to, facilitating an easy-to-implement registration process for registering interactive terminals to corresponding locations, and enabling delivery of location-specific content items to the interactive terminals.

Modifications to embodiments of the present disclosure described in the foregoing are possible without departing from the scope of the present disclosure as defined by the accompanying claims. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method of registering an interactive terminal to a location, comprising the steps of:
a) detecting a coupling of the interactive terminal to the location;
b) detecting an identification code associated with the location;
c) communicating the identification code to a server arrangement;
d) selecting, at the server arrangement, a content item based on the identification code associated with the location;
e) receiving the content item from the server arrangement; and
f) presenting the content item on a display of the interactive terminal.

2. The method of claim 1, wherein the steps a) and b) are performed by using a Radio-Frequency IDentification reader of the interactive terminal.

3. The method of claim 1 or 2, further comprising the step of verifying, at the server arrangement, a response related to the content item presented on the display, wherein the response is selected from the group consisting of:
- one or more gestures detected by a user interface of the interactive terminal;
- an image of the content item presented on the display of the interactive terminal; and
- a communication from a verification device.

4. The method of claim 3, wherein the content item presented on the display includes a visual representation, and wherein the image of the content item is captured with a camera of the verification device.

5. An interactive terminal (102, 202, 204, 302, 304, 306, 308, 710) comprising:
- means for attaching the interactive terminal to a location (104);
- a processor;
- a memory coupled to the processor, the memory storing computer-readable program code;
- a reader (114) coupled to the processor;
- a communication interface coupled to the processor; and
- a display (118, 712) coupled to the processor,
wherein, when executed on the processor, the computer-readable program code is configured to:
- employ the reader to detect an identification code associated with the location,
- communicate the identification code to a server arrangement (106), via the communication interface,
- receive a content item from the server arrangement, via the communication interface, wherein the content item is indicative of the location, and
- present the content item on the display.

6. The interactive terminal of claim 5, wherein the identification code is stored in a Radio-Frequency IDentification tag (116, 400) attached to the location (104), and wherein the reader is an Radio-Frequency IDentification reader that is arranged for reading the identification code from the Radio-Frequency IDentification tag.

7. The interactive terminal of claim 5 or 6, wherein the display (118, 712) is a bi-stable display.

8. The interactive terminal of any of the claims 5-7, further comprising a gesture sensing system for providing a user interface and for detecting one or more gestures performed by a user.

9. The interactive terminal of any of the claims 5-8, wherein the location (104) is selected from the group consisting of a towel dispenser attached to a structure (112) and a wall.

10. A system comprising:
- a server arrangement (106);
- a location (104) with an associated identification code; and
- an interactive terminal (102, 202, 204, 302, 304, 306, 308, 710) coupled in communication with the server arrangement, the interactive terminal having a terminal identifier, wherein the interactive terminal is configured to detect the identification code associated with the location, and to communicate the identification code and the terminal identifier to the server arrangement,
wherein the server arrangement is configured to generate registration information from the identification code and the terminal identifier to register the interactive terminal to the location, and wherein the server arrangement is configured to communicate a content item to the interactive terminal based on the registration information.

11. The system of claim 10, wherein the server arrangement is configured to populate a database with the identification code and the terminal identifier to store the registration information.

12. The system of claim 10 or 11, wherein the identification code is stored in a Radio-Frequency IDentification tag (116, 400) attached to the location (104), and wherein the interactive terminal comprises a Radio-Frequency IDentification reader that is arranged for reading the identification code from the Radio-Frequency IDentification tag.

13. The system of any of the claims 10-12, wherein the location (104) is selected from the group consisting of a towel dispenser attached to a structure (112) and a wall.

14. The system of any of the claims 10-13, wherein the server arrangement (106) is configured to verify a response related to the content item communicated to the interactive terminal (102, 202, 204, 302, 304, 306, 308, 710).

15. The system of claim 14, wherein the response is selected from the group consisting of:
- one or more gestures detected by a user interface of the interactive terminal;
- an image of the content item presented on a display of the interactive terminal; and
- a communication from a verification device.
